Europäisches Patentamt

European Patent Office

Office européen des brevets

(19)

(11) Numéro de publication: **0 039 871**
**B1**

(12) **FASCICULE DE BREVET EUROPEEN**

(45) Date de publication du fascicule du brevet: **04.01.84**

(21) Numéro de dépôt: **81103359.6**

(22) Date de dépôt: **05.05.81**

(51) Int. Cl.³: **G 02 F 1/01**, G 02 F 1/133, H 01 J 9/26

(54) Afficheur bidimensionnel à couche fluide commandée électriquement et son procédé de fabrication.

(30) Priorité: **08.05.80 FR 8010274**

(43) Date de publication de la demande:
**18.11.81 Bulletin 81/46**

(45) Mention de la délivrance du brevet:
**04.01.84 Bulletin 84/1**

(84) Etats contractants désignés:
**AT BE CH DE FR GB IT LI LU NL SE**

(56) Documents cités:
DE - A - 2 242 389
FR - A - 2 235 445
FR - A - 2 272 408
FR - A - 2 274 097
FR - A - 2 342 567
GB - A - 2 032 127
US - A - 3 858 284
US - A - 4 130 408

IBM TECHNICAL DISCLOSURE BULLETIN, vol. 21, no. 8, janvier 1979, New York, US; C.H. PERRY: "Aluminium Spacer Bond Medium", page 3254

(73) Titulaire: **SINTRA-ALCATEL Société Anonyme dite:**
**26, rue Malakoff B.P. 245**
**F-92600 Asnieres Cedex (FR)**

(72) Inventeur: **Droguet, Jean-Paul**
**110, avenue Marceau**
**F-92400 Courbevoie (FR)**
Inventeur: **Vernay, Michel**
**16, rue du Pont aux Choux**
**F-75003 Paris (FR)**

(74) Mandataire: **Weinmiller, Jürgen et al,**
**Zeppelinstrasse 63**
**D-8000 München 80 (DE)**

Courier Press, Leamington Spa, England.

Afficheur bidimensionnel à couche fluide commandée électriquement et son procédé
de fabrication

La présente invention concerne un afficheur bidimensionnnel à couche fluide commandée électriquement comportant
— une lame avant transparente,
— une lame arrière disposée en face de la lame avant en laissant entre elles un intervalle micrométrique prédéterminé maintenu grâce à une pluralité de plots espaceurs de même épaisseur disposés entre les lames avant et arrière et répartis sur la surface de ces lames,
— un cordon de scellement joignant des deux lames le long du bord d'une zone intérieure incluant ces plots pour former une enceinte étanche entre ces lames sur l'étendue de cette zone,
— un fluide présentant une caractéristique optique commandable électriquement et disposé dans cette enceinte de manière à y former une couche active mince,
— des électrodes disposées sur ces deux lames pour appliquer divers signaux électriques d'affichage à divers points de cette couche active de manière à commander en chacun de ces point la valeur de ladite caractéristique optique,
— des pistes de connexion constituées d'un métal déposé sur au moins une dite lame pour transmettre ces signaux d'affichage à ces électrodes,
— et des circuits de commande pour créer ces signaux d'affichage de manière à former une image utile dans cette couche active.

L'invention concerne en outre un procédé de fabrication d'un tel afficheur.

On appelle "afficheur" tout dispositif destiné à engendrer à partir de signaux électriques des images fixes ou mobiles constituées de caractères typographiques et/ou de graphiques linéaires, et éventuellement de teintes ou de valeurs de gris.

Quoiqu'un écran usuel de télévision constitue un tel afficheur, il n'est pas concerné par la présente invention car sa couche "optiquement active" c'est-à-dire celle qui engendre l'image, n'est pas constituée par un fluide.

Les afficheurs à plasma et les afficheurs à cristaux liquides constituent par contre des types connus d'afficheurs comportant une couche optiquement active fluide. Une telle couche est disposée entre deux lames dont l'une au moins, la lame avant, est transparente et ses caractéristiques optiques sont commandées par des signaux électriques.

Dans le cas des afficheurs à cristaux liquides, auxquels l'invention s'applique avantageusement, les lames avant et arrière portent des électrodes de ligne et de colonne constituées par des bandes conductrices transparentes. La couche active de cristal liquide doit avoir une épaisseur micrométrique c'est-à-dire comprise entre 2 micromètres et 100 micromètres, par exemple de l'ordre de 10 micromètres. Cette épaisseur doit être bien constante sur toute l'étendue de la partie utile de la couche, la tolérance étant de l'ordre de 7% dans le cas d'un cristal liquide nematique à birefringence contrôlée électriquement avec lequel on veut obtenir 16 niveaux de gris.

Il est difficile de tenir une telle tolérance lorsque la surface utile de l'afficheur n'est pas petite, par exemple lorsque cette surface a une largeur de 15cm et une hauteur de 9cm. Pour cela il est connu de réaliser les deux lames sous la forme de deux plaques de verre bien planes et très rigides fixées par leurs bords au bâti de l'afficheur. La rigidité nécessaire est obtenue en choisissant des lames très épaisses, de 12mm par exemple, et leur planeité résulte 'un polissage. Des cales isolantes sont disposées entre des deux lames, au voisinage des bords, pour maintenir l'intervalle désiré entre les lames. Un cordon de scellement périphérique permet de constituer une enceinte étanche entre ces lames.

Le prix de revient de ces lames des afficheurs connus est très élevé et restreint le domaine d'application de ces afficheurs.

C'est pourquoi il a été proposé d'utiliser des lames relativement minces et souples et d'assurer le maintien de la distance convenable entre ces lames par des espaceurs insérés entre elles et répartis sur toute la surface utile de l'afficheur. Une telle disposition est notamment décrite dans le document US—A 4 130 408 (Crossland).

Le prix de revient des afficheurs ainsi construits reste cependant élevé notamment en raison de la difficulté de réalisation des nombreuses connexions électriques entre les circuits de commande et les électrodes transparentes.

Selon le document FR—A 2 342 567 (BBC) des connexions entre des pistes de connexion des deux lames sont réalisées en même temps que des entretoises, par un matériau de liaison isolant dans lequel sont incorporées des particules métalliques de longueur supérieure à l'écart entre deux pistes en regard. Selon le document FR-A 2 274 097 (OPTEL) des pistes de connexion relient des électrodes à des pastilles de connexion soudables permettant la connexion à des circuits de commande extérieurs.

La présente invention a notamment pour but, dans un afficheur du type précédemment indiqué, de faciliter à la fois la réalisation des connexions électriques, celles des entretoises entre le lames et l'assemblage des deux lames.

Ce but est atteint selon l'invention par un afficheur tel que défini ci-dessus, qui est en outre caractérisé par le fait que l'une desdites lames est une lame porteuse qui porte des circuits de commande qui engendrent chacun plusieurs signaux d'affichage transmis respectivement par plusieurs pistes de connexion à plusieurs desdites électrodes portées par cette lame, chacun desdits plots espaceurs étant formé par deux demi-plots constitués du même métal que les pistes de connexion et adhérant chacun sur l'une des deux dites lames, et solidarisés par une couche de liaison consistant en une colle conductrice ou un métal de soudure.

La présente invention a également pour objet un procédé de fabrication d'un tel afficheur bidimensionnel à couche fluide commandée électriquement, ce procédé comportant les étapes suivantes:

— dépôt d'électrodes sur une lame avant transparente et sur une lame arrière,

— fixation de ces deux lames face à face de manière à laisser entre leurs faces internes en regard un intervalle micrométrique constant,

— dépôt d'un cordon de scellement joignant ces deux lames le long du bord d'une zone intérieure pour former une enceinte étanche entre les lames, cette zone intérieure comportant lesdites électrodes,

— remplissage de cette enceinte par un fluide présentant une caractéristique optique commandable électriquément,

— et connexion desdites électrodes à des circuits de commande propre à fournir des signaux d'affichage pour commander ladite caractéristique optique,

— caractérisé par le fait que ladite étape de fixation des deux lames face à face comporte elle-même les étapes suivantes:

dépôt sur chacune desdites faces internes de demi-plots métalliques adhérents de manière que chaque demi-plot déposé sur une lame vienne en face d'un demi-plot déposé sur l'autre lame, certains au moins de ces plots étant des plots espaceurs répartis dans ladite zone intérieure,

— dépôt d'une couche de liaison sur les sommets des demi-plots d'au moins une desdites lames,

— mise en place des deux lames avec contact entre les sommets des demi-plots se faisant face,

— et réalisation d'une liaison entre les demi-plots en contact, par l'intermédiaire de ladite couche de liaison, de manière à former des plots joignant les deux lames.

A l'aide des figures schématiques ci-jointes, on va décrire ci-après, à titre non limitatif, comment l'invention peut être mise en oeuvre.

La figure 1 représente une vue de face de la cellule d'un afficheur selon l'invention.

La figure 2 représente un détail A de la figure 1.

La figure 3 représente un détail B de la figure 1.

La figure 4 représente une vue en coupe selon une ligne IV—IV de la figure 3.

La figure 5 représente une vue en coupe selon une ligne V—V de la figure 2.

La figure 6 représente une vue en coupe de l'afficheur de la figure 1, le plan de coupe étant perpendiculaire aux lames.

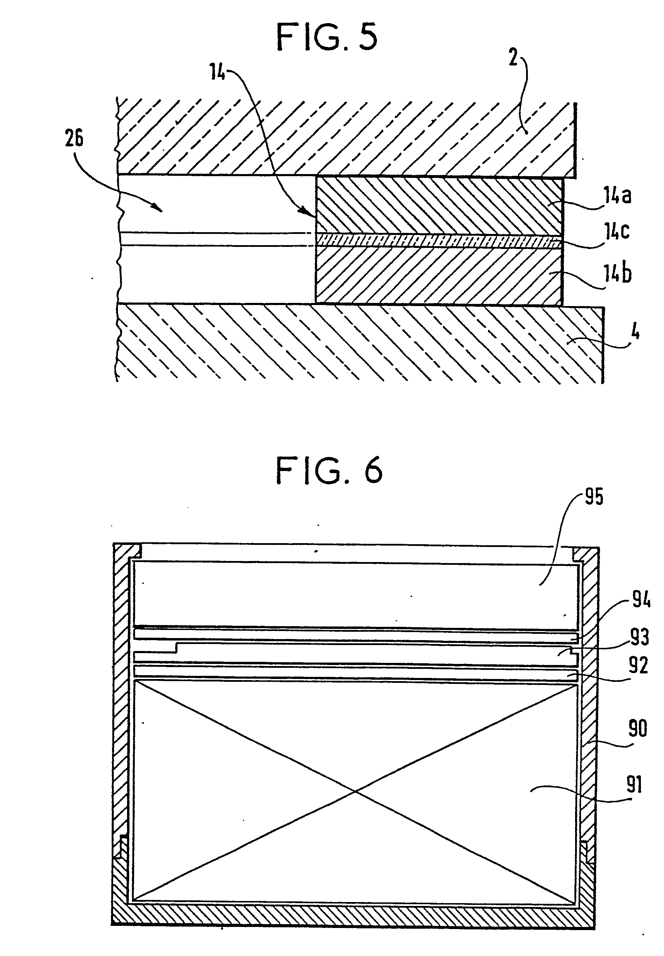

L'afficheur (voir figure 6) est disposé dans un bâti 90 ouvert à l'avant. Il comporte un générateur de lumière 91 disposé au fond de ce bâti pour fournir un faisceau de lumière parallèle horizontal de 15cm de large sur 9cm de haut qui traverse en série les éléments ci-après disposés selon une succession de plans perpendiculaires à ce faisceau:

— un polariseur 92,

— une "cellule" transparente 93 qui sera décrite ci-après et qui contient une couche de cristal liquide à birefringence commandée électriquement. Cette cellule modifie la polarisation de la lumière qui la traverse. Elle crée ainsi une image, grâce à une commande indépendante de 106 496 points répartis en 416 colonnes verticales et 256 lignes;

— un analyseur de polarisation 94 pour rendre visible l'image ainsi créée,

— et un diffuseur optique 95 assurant en même temps la protection mécanique de la cellule.

On va maintenant décrire la cellule 93, constituée à partir de deux lames rectangulaires de verre mince.

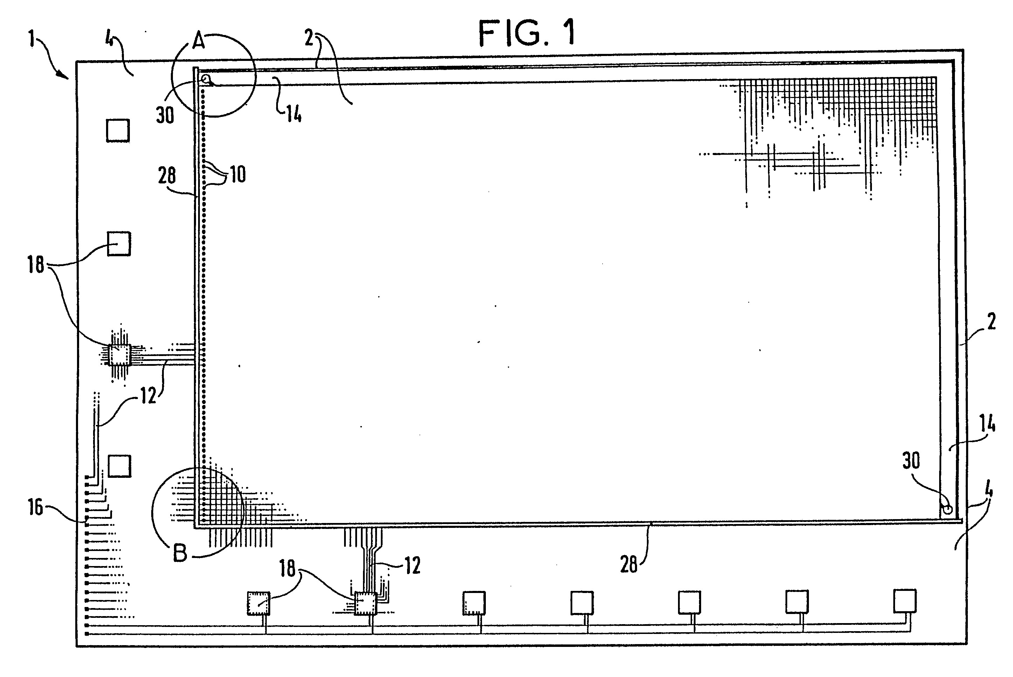

Selon les figures 1, 2 et 3 une lame avant 2 est disposée en face d'une lame arrière 4 qui déborde de la lame avant. La partie débordante de la lame arrière porte, sur sa face "interne" c'est-à-dire en regard de la lame avant, onze circuits intégrés de commande 18, à 64 sorties chacun, connectés par fils à des pistes de connexion en cuivre étamé 12 menant les unes à des électrodes décrites ci-après, les autres à des plages de connexion métallisées 16 permettant une connexion à des circuits extérieurs par une liaison souple. Cette lame arrière constitue une lame "porteuse".

Sept circuits 18 alimentent 416 électrodes de colonnes 22 déposées sous forme de bandes verticales transparentes sur la lame arrière. Ces électrodes sont larges de 200 microns et réparties avec un pas de 350 microns. Elles sont connectées aux circuits intégrés 18 par des pistes 12 en cuivre étamé, disposées verticalement.

Quatre circuit 18 alimentent 256 électrodes de ligne 24 disposées comme les électrodes de colonne 22, sauf qu'elles sont horizontales et déposées sur la face interne de la lame avant 2. La connexion de ces électrodes de ligne aux circuits de commande se fait par l'intermédiaire de plots métalliques "connecteurs" 10 reliant les faces internes des deux lames, de bandes conductrices transparentes horizontales 12a, et de pistes de cuivre étamé 12 déposées horizontalement sur la lame arrière 4 en continuité avec les bandes 12a.

Le nombre des connexions à assurer par liaisons souples entre les circuits extérieurs et les circuits intégrés 18 est beaucoup plus faible que celui des connexions entre ces circuits intégrés 18 et les électrodes 22 et 24.

Au centre de chacun des espaces libres carrés de 150 microns de côté s'étendant à la fois entre deux électrodes de ligne, et deux électrodes de colonne, est disposé un plot métallique "espaceur" carré de 50 microns environ de côté réunissant les deux lames de manière à maintenir l'intervalle 26 entre les deux lames à une épaisseur constante de 10 microns. Une enceinte étanche est formée entre les deux lames, sur une "zone intérieure" coextensive à la lame avant 2, par un cordon de scellement qui s'étend tout le long du bord de celle-ci.

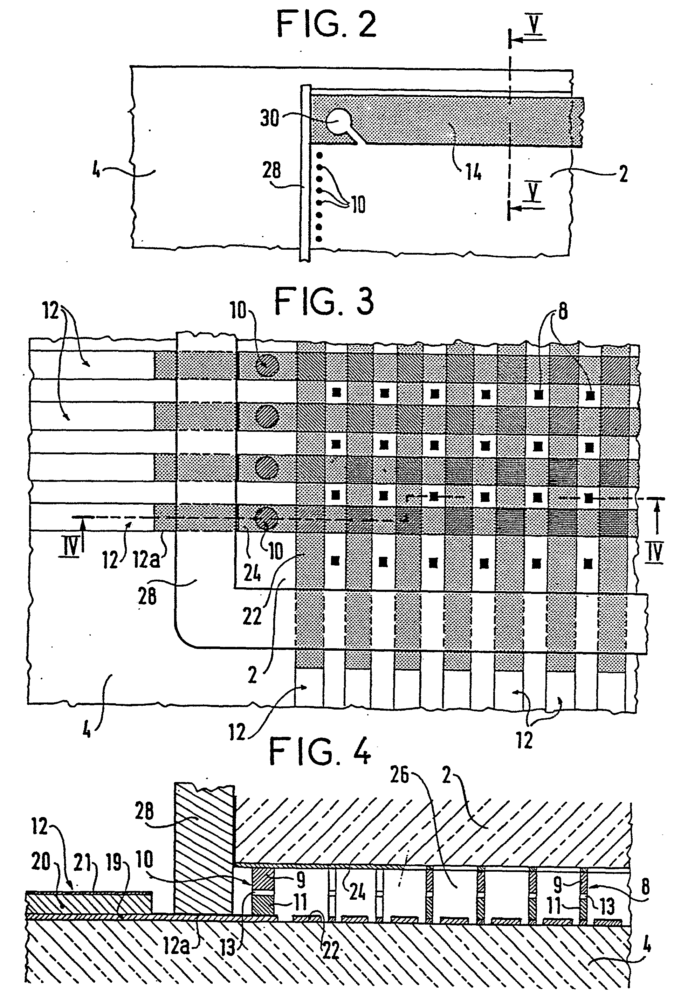

Ce cordon est constitué sur deux côtés du rectangle par une colle isolante 28 (figure 4) qui recouvre localement les bandes 12a, et qui est appliquée contre la tranche de la lame avant. Sur les deux autres côtés du rectangle, il est constitué par un mur métallique 14 disposé entre les deux lames et formé par deux demi murs métalliques 14a et 14b réunis par une couche de liaison métallique 14c (figure 5). L'enceinte ainsi formée est remplie d'un cristal liquide dont la birefringence est commandée par application de signaux électriques d'affichage entre les électrodes de ligne 24 et les électrodes de colonne 22. La mise en oeuvre de ce cristal et les caractéristiques des signaux d'affichage sont décrites, par exemple, dans les brevets français suivants:

2.198.167 (Procédé de commande d'une caractéristique optique d'un cristal liquide et dispositif de mise en oeuvre de ce procédé).

2.238.167 (Procédé de commande d'imageur).

2.279.123 (Procédé de commande d'une caractéristique optique d'un matériau et imageur analogique mettant en oeuvre ce procédé).

On va maintenant indiquer, à titre d'exemple, le procédé de fabrication de la cellule 93 qui vient d'être décrite.

On prépare deux lames de verre d'environ 0,3mm d'épaisseur à savoir la lame avant (2) de 150 x 90mm et la lame arrière (4) de 170 x 110mm.

On les nettoie par les procédés classiques dans l'industrie avant métallisation. Sur la face avant de la lame arrière et sur la face arrière de la lame avant on effectue ensuite des opérations classiques de dépôt et de gravure sélective, à l'aide de laques photosensibles et d'insolation à travers des masques.

On dépose d'abord une couche "de base" continue d'oxyde d'indium dopé à l'étain 19, de composition connue de l'homme de l'art sous les initiales I.T.O. pour les dépôts conducteurs transparents. Cette couche est épaisse d'environ 0,1 micromètre.

On effectue ensuite un dépôt de cuivre chimique pour former une couche d'accrochage continue épaisse de 0,2 micromètre environ.

Sur cette couche d'accrochage, on fait croître selectivement par électrolyse (grâce à un photomasquage) une couche de cuivre d'environ 3,7 micromètres pour constituer avec cette couche d'accrochage, une couche métallique principale 20. Cette croissance est effectuée seulement sur les zones correspondant aux plots espaceurs 8, aux plots connecteurs 10, et au mur d'étanchéité 14, cela sur les deux lames, et aux emplacements des pistes de connexion 12 sur la lame arrière.

On effectue alors un étamage chimique ou électrolytique de manière à réaliser un dépôt d'étain 21 d'épaisseur environ 1 micromètre constituant ladite couche de liaison 13 sur les demi-plots ou 14c sur les demi murs 14b, et facilitant la prise de contact sur les pistes 12.

On élimine ensuite sur chaque lame la couche de résine photosensible déposée lors de l'opération de photomasquage.

On procédé ensuite à l'élimination du cuivre chimique et, après une autre opération de photomasquage, à la gravure (attaque chimique classique) de la couche d'oxyde d'indium. Cette dernière attaque détermine la position des électrodes de chaque lame de telle sorte que celles-ci soient horizontales sur la lame avant et verticales sur la lame arrière.

On réalise ainsi 416 électrodes de colonne larges de 200 micromètres avec des intervalles de 150 micromètres sur la lame arrière et 256 électrodes de ligne avec la même largeur et le même intervalle sur la lame avant.

On procède ensuite au nettoyage des lames pour éliminer les résines de photomasquage.

On superpose ensuite les deux lames en mettant les demi-plots de la lame avant au contact des demi-plots de la lame arrière, et on les maintient dans cette position relative à l'aide de moyens d'assemblage temporaire.

On porte ensuite l'assemblage des deux lames à une température d'environ 240°C an exerçant une pression uniformément répartie sur toute la zone "intérieure" occupée par les plots, ce qui réalise la soudure de liaison des deux lames.

On dépose ensuite le long du bord de la lame avant un cordon isolant de scellement en colle époxy par exemple. Dans un mode de réalisation non représenté ce cordon fait tout le tour la zone intérieure.

On prend alors soin de laisser deux ouvertures dans des coins opposés. Ces deux ouvertures servent d'accès de remplissage en cristaux liquides et sont ensuite obturées par une goutte de colle.

Dans la mode de réalisation représenté on a percé deux trous de 2mm de diamètre dans la lame avant, chacun en regard d'une réserve 30 dans le mur d'étanchéité 14 et cela avant les opérations de dépôt et gravure de la lame. Cela évite de laisser deux ouvertures dans le cordon de colle et permet le remplissage en cristal liquide par la même technique classique de remplissage sous vide. Après ce remplissage la fermeture se fait dans cette version par apport d'une goutte de soudure à l'étain dans ces deux trous, la soudure adhérant sur le mur d'étanchéité. Les réserves 30 faites dans ce mur débouchent bien entendu dans l'intérieur de la cellule et n'atteignent pas la face extérieure du mur.

Le cristal liquide utilisé dans la réalisation de l'invention est un mélange eutectique classique de corps connus sous les noms de MBBA (méthoxybenzylidène-butyl) et EBBA (éthoxy-benzylidène-butyle), dont l'effet nématique est celui de la biréfringence contrôlée.

On a ainsi constitué une cellule contenant une couche d'épaisseur constante de cristal liquide, et qui présente des électrodes croisées sur ses faces internes et des liaisons de raccordement électrique de ces électrodes vers l'extérieur. Ces raccordements présentent l'avantage d'être tous ramenés sur une seule face, celle-ci étant dans l'exemple décrit la face avant de la lame arrière, qui constitue ainsi une lame "porteuse".

On équipe ensuite la cellule de son électronique de commande en fixant les circuits intégrés de commande sur la face avant de la lame arrière qui joue alors le rôle de substrat.

Les circuits intégrés 18 de commande sont avantageusement utilisés sous leur forme nue (chip ou puce) et interconnectés aux pistes de raccordement selon les techniques bien connues de l'industrie de la microélectronique.

Des plages de soudure 16 en extrémité de certaine piste de raccordement permettent la liaison de la cellule à l'extérieur.

Bien entendu la liaison entre les deux demi-plots 9 et 11 des plots espaceurs 8 pourrait éventuellement être réalisée par une colle conductrice au lieu d'une soudure métallique. Par ailleurs, si les plots sont entièrement métalliques, ils peuvent être constitués non seulement de cuivre mais aussi d'autres métaux tels que l'or, le nickel et le palladium, la soudure pouvant être constituée non seulement par de l'étain mais aussi par d'autres métaux tels que l'indium ou un alliage.

Quoi que cela ne soit pas représenté il peut être avantageux de donner à la lame porteuse 4 une épaisseur supérieure à celle de l'autre lame, de façon à constituer un support mécanique plus rigide.

Il est par ailleurs bien évident que les demi plots peuvent être d'épaisseurs différentes sur les deux lames pourvu que l'épaisseur totale des plots obtenus finalement entre dans les tolérances prévues.

Un capteur de température non représenté peut avantageusement être fixé sur la lame porteuse 4 pour réguler le fonctionnement de l'afficheur. On sait en effet que la réponse des cristaux liquides à un signal donné varie avec leur température.

Un tel capteur de température commande comme connu un circuit de régulation connecté aux circuits de commande 18 de manière à faire varier une caractéristique d'amplitude ou de phase des signaux d'affichage pour obtenir finalement un fonctionnement optique pratiquement indépendant de la température. Les connexions nécessaires à cette régulation sont assurées par des pistes 12.

**Revendications**

1. Afficheur bidimensionnel à couche fluide commandée électriquement comportant

— une lame avant transparente (2), — une lame arrière (4) disposée en face de la lame avant en laissant entre elles un intervalle micrométrique prédéterminé (26) maintenu grâce à une pluralité de plots espaceurs (8) de même épaisseur disposés entre les lames avant (2) et arrière (4) et répartis sur la surface de ces lames,

— un cordon de scellement (28, 14) joignant ces deux lames le long du bord d'une zone intérieure incluant ces plots pour former une enceinte étanche entre ces lames sur l'étendue de cette zone,

— un fluide présentant une caractéristique optique commandable électriquement et disposé dans cette enceinte de manière à y former une couche active mince,

— des électrodes (22, 24) disposées sur ces deux lames pour appliquer divers signaux électriques d'affichage à divers points de cette couche active de manière à commander en chacun de ces points la valeur de ladite caractéristique optique,

— des pistes de connexion (12) constituées d'un métal déposé sur au moins une dite lame pour transmettre ces signaux d'affichage à ces électrodes,

— et des circuits de commande (18) pour créer ces signaux d'affichage de manière à former une image utile dans cette couche active,

— cet afficheur étant caractérisé par le fait que l'une desdites lames est une lame porteuse (4) qui porte des circuits de commande (18) qui engendrent chacun plusieurs signaux d'affichage transmis respectivement par plusieurs pistes de connexion (12) à plusieurs desdites électrodes (22) portées par cette lame, chacun desdits plots espaceurs étant formé par deux demi-plots (9, 11) constitués du même métal que les pistes de connexion et adhérant chacun sur l'une des deux dites lames (2, 4) et solidarisés par une couche de liaison (13) consistant en une colle conductrice ou un métal de soudure.

2. Afficheur selon la revendication 1, dans lequel

— les deux dites lames (2, 4) sont isolantes,

— lesdites électrodes sont des électrodes de ligne (24) formant une succession de lignes sur la face arrière de la lame avant (2), et des électrodes de colonne (22) formant une succession de colonnes sur la face avant de la lame arrière (4),

— lesdits signaux d'affichage étant des signaux de lignes appliqués à ces électrodes de ligne et des signaux de colonnes appliqués à ces électrodes de colonne,

— caractérisé par le fait que la lame porteuse (4) porte des circuits de commande (18) pour engendrer sur cette lame aussi bien des signaux de ligne que des signaux de colonne,

— l'afficheur comportant en outre des éléments connecteurs (10) reliant les deux dites lames et transmettant, à partir de la lame porteuse (4), les signaux d'affichage qui doivent être appliqués aux électrodes (24) de l'autre lame (2),

— les plots espaceurs (8) étant disposés à la fois entre les électrodes de ligne (24) et entre les électrodes de colonne (22).

3. Afficheur selon la revendication 2, caractérisé par le fait que chacun desdits éléments connecteurs présente la forme d'un plot connecteur (10) constitué par deux demi-plots (9, 11) formé du même métal que les pistes de connexion (12) et adhérant chacun sur l'une des deux dites lames (2, 4) et par une couche de liaison conductrice (13) liant ces deux demi-plots.

4. Afficheur selon la revendication 1, caractérisé par le fait que lesdits circuits de commande (18) sont au moins partiellement portés par ladite lame porteuse (4) en dehors de ladite zone intérieure.

5. Afficheur selon la revendication 1, caractérisé par le fait que lesdites électrodes (22, 24) sont constituées par des bandes conductrices à résistance linéique plus grande que celles des pistes conductrices (12), ladite couche active étant constituée par un cristal liquide.

6. Afficheur selon la revendication 1, caractérisé par le fait que la lame non porteuse (2) est moins étendue que la lame porteuse (4) et portée par cette lame porteuse par l'intermédiaire desdits plots (8), les circuits de commande (18) étant disposés sur la lame porteuse (4) en dehors de la zone couverte par la lame portée, de manière à faciliter la maintenance de ces circuits.

7. Procédé de fabrication d'un afficheur bidimensionnel selon l'une des revendications 1 à 6, ce procédé comportant les étapes suivantes:

— dépôt d'électrodes (24, 22) sur une lame avant transparente (2) et sur une lame arrière (4),

— fixation de ces deux lames face à face de manière à laisser entre leurs faces internes en regard un intervalle micrométrique constant (26),

— dépôt d'un cordon de scellement (28, 14) joignant ces deux lames le long du bord d'une zone intérieure pour former une enceinte étanche entre les lames, cette zone intérieure comportant lesdites électrodes,

— remplissage de cette enceinte par un fluide présentant une caractéristique optique commandable électriquement,

— et connexion desdites électrodes (22, 24) à des circuits de commande (18) propres à fournir des signaux d'affichage pour commander ladite caractéristique optique,

— caractérisé par le fait que ladite étape de fixation des deux lames (2, 4) face à face comporte elle-même les étapes suivantes:

— dépôt sur chacune desdites faces internes de demi-plots métalliques adhérents (9, 11) de manière que chaque demi-plot déposé sur une lame (2) vienne en face d'un demi-plot déposé sur l'autre lame (4), certains au moins de ces plots étant des plots espaceurs répartis dans ladite zone intérieure,

— dépôt d'une couche de liaison (13) sur les sommets des demi-plots (9, 11) d'au moins une desdites lames,

— mise en place des deux lames (2, 4) avec contact entre les sommets des demi-plots (9, 11) se faisant face,

— et réalisation d'une liaison entre les demi-plots (9, 11) en contact, par l'intermédiaire de ladite couche de liaison (13), de manière à former des plots (8, 10) joignant les deux lames.

8. Procédé selon la revendication 7, caractérisé par le fait que ladite étape de connexion des électrodes à des circuits de commande comporte elle-même les étapes suivantes:

— dépôts de pistes conductrices (12) formées à l'aide du même métal que les demi-plots sur la lame porteuse (4) pour permettre d'assurer la connexion des circuits de commande (18) aux électrodes (22, 24) des deux lames, la résistance linéique de ces pistes étant plus faible que celle de ces électrodes, ce dépôt étant simultané à celui de demi-plots de la lame porteuse, la couche de liaison étant choisie conductrice et la connexion entre ces pistes et les électrodes (24) de l'autre lame (2) étant assurée par l'intermédiaire de certains desdits plots qui sont des plots connecteurs,

— et fixation desdits circuits de commande (18) sur la lame porteuse (4) avec connexion de ces circuits à ces pistes conductrices.

9. Procédé selon la revendication 8, caractérisé par le fait que lesdites étapes de dépôt d'électrodes (22), de dépôt de pistes conductrices (12), et de dépôt de demi-plots métalliques adhérents (9), comportent des étapes communes de dépôt avec gravures sélectives, à savoir:

— dépôt d'une couche conductrice de base mince (19) pour former à la fois lesdites électrodes (22), une première couche desdits demi-plots (11), et une première couche de pistes de connexion (12),

— et dépôt électrolytique d'une couche métallique principale (20) sur la couche de base pour former à la fois une couche principale des demi-plots (11) et des pistes (12).

**Patentansprüche**

1. Zweidimensionale Anzeigevorrichtung mit elektrisch gesteuerter Fluidschicht, die enthält

— ein vorderes transparentes Substrat (2),

— ein hinteres Substrat (4), das gegenüber dem vorderen Substrat angeordnet ist, wobei zwischen ihnen ein vorbestimmter mikrometrischer Abstand (26) aufgrund einer Vielzahl von Abstandsstiften (8) gleicher Dicke verbleibt, die zwischen dem vorderen (2) und dem hinteren Substrat (4) angeordnet und über die Oberflächen dieser Substrate verteilt sind,

— einen Versiegelungsring (28, 14) der diese beiden Substrate entlang des Rands einer inneren Zone verbindet, der diese Stifte einschließt, um zwischen den Substraten einen sich über diese Zone erstreckenden dichten Bereich zu bilden,

— ein Fluid, das eine elektrisch steuerbare optische Eigenschaft aufweist und sich in diesem Bereich befindet, um hier eine dünne aktive Schicht zu bilden,

— Elektroden (22, 24), die auf diesen beiden Substraten angeordnet sind, um verschiedene elektrische Anzeigesignale auf verschiedene Punkte dieser aktiven Schicht zu richten und so in jedem dieser Punkte den Wert der genannten optischen Eigenschaften zu steuern,

— Anschlußbahnen (12) bestehend aus einem Metall, das auf mindestens eines der Substrate aufgebracht ist, um diese Anzeigesignale auf diese Elektroden zu übertragen,

— und Steuerschaltkreise (18), um diese Anzeigesignale zu erzeugen, um ein nützliches Bild in dieser aktiven Schicht herzustellen,

dadurch gekennzeichnet, daß eines der Substrate ein Trägersubstrat (4) ist, das Steuerschaltkreise (18) trägt, die jeder mehrere Anzeigesignale erzeugen, die je über mehrere Anschlußbahnen (12) zu mehreren der genannten von diesem Substrat getragenen Elektroden (22) übertragen werden, wobei jeder der Abstandsstifte aus zwei Halbstiften (9, 11) gebildet wird, die aus demselben Metall wie die Anschlußbahnen bestehen, je auf einem der beiden Substrate (2, 4) befestigt sind und durch eine Verbindungsschicht (13) bestehend aus einem leitenden Kleber oder einem Metallot aneinander befestigt werden.

2. Anzeigevorrichtung nach Anspruch 1, in der

— die beiden Substrate (2, 4) isolierend sind,

— die Elektroden Zeilenelektroden (24), die eine Folge von Zeilen auf der Rückseite des vorderen Substrats (2) bilden, und Spaltenelektroden (22) sind, die eine Folge von Spalten auf der Vorderseite des hinteren Substrats (4) bilden,

— wobei die Anzeigesignale Zeilensignale sind, die an diese Zeilenelektroden angelegt werden, und Spaltensignale, die an diese Spaltenelektroden angelegt werden,

dadurch gekennzeichnet, daß das Trägersubstrat (4) Steuerschaltkreise (18) trägt, um auf diesem Substrat Zeilensignale wie auch Spaltensignale zu erzeugen,

— die Anzeigevorrichtung außerdem Anschlußelemente (10) aufweist, die die beiden Substrate verbinden und ausgehend vom Trägersubstrat (4) die Anzeigesignale übertragen, die an die Elektroden (24) des anderen Substrats (2) angelegt werden sollen,

— und die Abstandsstifte (8) sowohl zwischen den Zeilenelektroden (24) als auch zwischen den Spaltenelektroden (22) angeordnet sind.

3. Anzeigevorrichtung nach Anspruch 2, dadurch gekennzeichnet, daß jedes der Anschlußelemente die Form eines Anschlußstiftes (10) aufweist, der aus zwei Halbstiften (9, 11), die aus dem gleichen Metall wie die Anschlußbahnen (12) bestehen und je auf einem der beiden Substrate (2, 4) befestigt sind, und einer leitenden Verbindungsschicht (13) gebildet wird, die diese beiden Halbstifte verbindet.

4. Anzeigevorrichtung nach Anspruch 1, dadurch gekennzeichnet, daß die Steuer-schaltkreise (18) zumindest teilweise vom Trägersubstrat (4) außerhalb der inneren Zone getragen werden.

5. Anzeigevorrichtung nach Anspruch 1, dadurch gekennzeichnet, daß die Elektroden (22, 24) aus leitenden Bändern mit größerem Längswiderstand als dem der leitenden Bahnen (12) bestehen, wobei die aktive Schicht aus einem Flüssigkristall gebildet wird.

6. Anzeigevorrichtung nach Anspruch 1, dadurch gekennzeichnet, daß das obere Substrat (2) weniger ausgedehnt als das Trägersubstrat (4) ist und von diesem Trägersubstrat über die Stifte (8) getragen wird, wobei die Steuerschaltkreise (18) auf dem Trägersubstrat (4) außerhalb der von dem getragenen Substrat bedeckten Zone angeordnet sind, um die Wartung dieser Schaltkreise zu erleichtern.

7. Herstellungsverfahren für eine bidimensionale Anzeigevorrichtung mit elektrisch gesteuerter Fluidschicht nach einem der Ansprüche 1 bis 6, wobei dieses Verfahren die folgenden Schritte aufweist:

— Auftragen von Elektroden (24, 22) auf ein vorderes transparentes Substrat (2) und ein hinteres Substrat (4),

— Befestigung dieser beiden Substrate einander gegenüber, so daß zwischen ihren gegenüberliegenden Innenseiten ein konstanter mikrometrischer Abstand (26) verbleibt,

— Aufbringen eines Versiegelungsrings (28, 14), der die beiden Substrate entlang des Rands einer inneren Zone miteinander verbindet, um einen dichten Bereich zwischen den Substraten zu bilden, wobei diese innere Zone die Elektroden aufweist,

— Füllen dieses Bereichs mit einem Fluid, das eine elektrisch steuerbare optische Eigenschaft aufweist,

— und Anschluß dieser Elektroden (22, 24) an Steuerschaltkreise (18) zur Lieferung von Anzeigesignalen, um die optische Eigenschaft zu steuern,

dadurch gekennzeichent, daß die Befestigung der beiden Substrate (2, 4) einander gegenüber selbst die folgenden Schritte aufweist:

— Aufbringen von haftenden metallischen Halbstiften (9, 11) auf jeder der Innenseiten, so daß jeder auf einem Substrat (2) angebrachte Halbstifte gegenüber einem auf dem anderen Substrat (4) angebrachten Halbstift liegt, wobei zumindest einige dieser Stifte Abstandsstifte sind, die in der inneren Zone verteilt sind,

— Aufbringen einer Verbindungsschicht (13) auf die Spitzen der Halbstifte (9, 11) mindestens eines der Substrate,

— Anordnung der beiden Substrate (2, 4) mit Kontakt zwischen den Spitzen der sich gegenüberliegenden Halbstifte (9, 11),

— und Herstellung einer Verbindung zwischen den sich berührenden Halbstiften (9, 11) über die Verbindungsschicht (13), um Stifte (8, 10) zu bilden die die beiden Substrate verbinden.

8. Verfahren nach Anspruch 7, dadurch gekennzeichnet, daß die Verbindung der Elektroden mit Steuerschaltkreisen die folgenden Schritte aufweist:

— Auftragen der leitenden Bahnen (12), die aus dem gleichen Metall wie die Halbstifte auf dem Trägersubstrat (4) gebildet sind, um die Verbindung der Steuerschaltkreise (18) mit den Elektroden (22, 24) der beiden Substrate zu bewirken, wobei der Längswiderstand dieser Spuren geringer ist als der der Elektroden und dieses Auftragen gleichzeitig mit dem der Halbstifte des Trägersubstrats erfolgt, wobei die Verbindungsschicht als leitende Schicht gewählt wird und die Verbindung zwischen diesen Bahnen und den Elektroden des anderen Substrats (2) über gewisse Stifte geschieht, die Verbindungsstifte sind,

— und Befestigung der Steuerschaltkreise (18) auf dem Trägersubstrat (4) mit Anschluß dieser Schaltkreise an diese leitenden Bahnen.

9. Verfahren nach Anspruch 8, dadurch gekennzeichnet, daß das Aufbringen von Elektroden (22), das Aufbringen von leitenden Bahnen (12) und das Aufbringen von haftenden metallischen Halbstiften (9) gemeinsame Aufbringungsschritte mit selektiven Gravuren aufweisen, und zwar:

— Aufbringen einer dünnen leitenden Basisschicht (19), um zugleich die Elektroden (22), eine erste Schicht der Halbstifte (11) und eine erste Schicht der Anschlußbahnen (12) zu bilden,

— und elektrolytisches Aufbringen einer metallischen Hauptschicht (20) auf der Basisschicht, um gleichzeitig eine Hauptschicht der Halbstifte (11) und der Bahnen (12) zu bilden.

## Claims

1. A two-dimensional display unit with an electrically controlled fluid, including:

— a transparent front plate (2),

— a back plate (4) disposed face to face with the front plate, a predetermined micrometric gap (26) being maintained between them by a plurality of spacer studs (8) all of identical thickness disposed between the front plate (2) and the back plate (4) and spaced out on the surfaces of these plates,

— a sealing strip (28, 14) which joins these two plates along the edge of an inner zone which includes these studs to form a sealed chamber between these plates throughout said zone,

— a fluid having an optical characteristic which can be electrically controlled and which is disposed in this chamber so as to form a thin active layer therein,

— electrodes (22, 24) disposed on the two plates to apply various electric display signals to various points of this active layer so as to control the value of said optical characteristic at each of these points,

— connection tracks (12) consisting of a metal disposed on at least one of said plates so as to transmit these display signals to these electrodes,

— and control circuits (18) to generate these display signals so as to form a useful image in this active layer,

this display unit being characterized in that one of said plates is a carrier plate (4) which carries control circuits (18) each of which generates several display signals transmitted respectively by several connection tracks (12) to several of said electrodes (22) carried by this plate, each of said spacer studs being constituted by two half studs (9, 11) made of the same metal as the connection tracks and each adhering to one of said plates (2, 4) and connected by a connection layer (13) consisting of a conductive glue or a soldering metal.

2. A display unit according to claim 1, wherein:

— said two plates (2, 4) are insulating plates,

— said electrodes are row electrodes (24) which form a succession of rows on the rear surface of the front plate (2), and column electrodes (22) which form a succession of columns on the front surface of the back plate (4),

— said display signals being row signals applied to these row electrodes and column signals applied to these column electrodes, characterized in that the carrier plate (4) carries control circuits (18) to generate both row signals and column signals on this plate,

— the display unit further including connector components (10) which connect the said two plates together and transmit from the carrier plate (4) the display signals which are to be applied to the electrodes (24) of the other plate (2),

— the spacer studs (8) being disposed both between the row electrodes (24) and between the column electrodes (22).

3. A display unit according to claim 2, characterized in that each of said connection components is in the shape of a connection stud (10) constituted by two half studs (9, 11) made of the same metal as the connection tracks (12) and each adhering to one of said two plates (2, 4), and by a conductive connection layer (13) which connects the two half studs together.

4. A display unit according to claim 1, characterized in that said control circuits (18) are at least partially carried by said carrier plate (4) outside said inner zone.

5. A display unit according to claim 1, characterized in that said electrodes (22, 24) are constituted by conductive strips whose resistance per unit length is greater than that of the conductive tracks (12), said active layer being made of a liquid cristal.

6. A display unit according to claim 1, characterized in that the non-carrier plate (2) is not so large as the carrier plate (4) and is carried by this carrier plate via said studs (8), the control circuits (18) being disposed on the carrier plate (4) outside the zone covered by the carried plate, so as to facilitate maintenance of these circuits.

7. A method of manufacturing a two-dimensional display unit according to any one of claims 1 to 6, this method including the following steps:
— depositing electrodes (24, 22) on a transparent front plate (2) and on a back plate (4),
— fixing these two plates face to face so as to leave a constant micrometric gap (26) between their facing inside surfaces,
— depositing a sealing strip (28, 14) which joins these two plates together along the edge of an inner zone to form a sealed chamber between the two plates, this inner zone containing said electrodes,
— filling this chamber with a fluid having an optical characteristic which is electrically controllable,
— and connecting said electrodes (22, 24) to control circuits (18) which are suitable for supplying display signals to control said optical characteristic,
— characterized in that said step during which the two plates (2, 4) are fixed face to face itself includes the following steps:
— depositing adhesive metal half studs (9, 11) on each of the inner surfaces in such a way that each half stud deposited on one plate (2) is in register with a half stud deposited on the other plate (4), at least some of these studs being spacer studs spaced out in said inner zone,
— depositing a connection layer (13) on the tops of the half studs (9, 11) of at least one of the plates,

— installing the two plates (2, 4) with contact between the tops of the half studs (9, 11) which face each other,
— and forming a connection between the half studs (9, 11) in contact via said connection layer (13) so as to form studs (8, 10) which join the two plates together.

8. A method according to claim 7, characterized in that said step during which the electrodes are fixed to control circuits itself includes the following steps:
— depositing conductive tracks (12) made of the same metal as the half studs on the carrier plate (4) so that the control circuits (18) can be connected to the electrodes (22, 24) of the two plates, the resistance per unit length of these tracks being less than that of the electrodes, this deposit being made simultaneously to that of the half studs of the carrier plate, the connection layer being conductive, and the connection between these tracks and the electrodes (24) of the other plate (2) being provided by means of some of the studs which are connector studs,
— and fixing said control circuits (18) on the carrier plate (4), these circuits being connected to these conductive tracks.

9. A method according to claim 8, characterized in that said steps during which electrodes (22) are deposited, conductive tracks (12) are deposited and adhesive metal half studs (9) are deposited include common depositing steps with selective engraving, namely:
— depositing a thin conductive basic layer (19) to form simultaneously said electrodes (22), a first layer of said half studs (11) and a first layer of connection tracks (12),
— and electrolytically depositing a main metal layer (20) on the basic layer to form simultaneously a main layer of half studs (11) and of connection tracks (12).

# FIG. 1

0039 871

# FIG. 2

# FIG. 3

# FIG. 4

# FIG. 5

# FIG. 6